# EUROPEAN PATENT SPECIFICATION

(11) **EP 1 209 616 B1**
(45) Date of publication and mention of the grant of the patent: **17.05.2006**
(21) Application number: 00982732.0
(22) Date of filing: 21.07.2000
(51) Int. Cl.: G06K 19/06, G06K 19/14, B42D 15/10

(54) **DATA MEDIA**
DATENTRÄGER
SUPPORT DE DONNEES

(30) Priority: 06.08.1999 RU 99117002
(43) Date of publication of application: 29.05.2002
(73) Proprietor: Belousov, Boris Iliich, Moscow, 127490 (RU); Zhdanov, Gennady Stepanovich, Obninsk, Kaluzhskaya obl., 249020 (RU)
(72) Inventor: BELOUSOV, Boris Iliich, Moscow, 127490 (RU); ZHDANOV, Gennady Stepanovich, Kaluzhskaya obl., 249020 (RU); APEL, Pavel Jurievich, Dubna Moskovskaya obl., 141980 (RU); BELOUSOV, Anton Borisovich, Moscow, 127490 (RU); DIDYK, Alexandr Jurievich, Dubna Moskovskaya obl., 141980 (RU); DMITRIEV, Sergei Nikolaevich, Dubna, Moskovskaya obl., 141980 (RU); KARPUKHINA, Ljudmila Grigorievna, St.Petersburg, 195256 (RU); KUDOYAROV, Mikhail Fedorovich, St.Petersburg, 194274 (RU); KIM, Svyatoslav Eliseevich, Krasnoyarsk, 660000 (RU); KONDRATENKO, Mikhail Julianovich, Moskovskaya obl., 143980 (RU); OGANESYAN, Jury Tsolakovich, Moskovskaya obl., 141980 (RU); FURSOV, Boris Ivanovich, Kaluzhskaya obl., 249020 (RU)
(74) Representative: Einsel, Martin
(86) International application number: PCT/RU2000/000306
(87) International publication number: WO 2001/011557

(56) References cited:
- EP-A- 0 853 296
- EP-A2- 0 533 448
- DE-A- 4 126 051
- RU-C1- 2 079 166
- US-A- 4 376 887
- US-A- 4 766 026

## Description

The invention relates to data carriers in which are used various methods for information recording, which prevent an unauthorized copying or counterfeiting of the data carriers being protected in such way, and the invention can be widely used for protecting documents, stocks from counterfeiting or copying.

A data carrier is known comprising at least three layers being connected to each other, middle and upper layers being made of opaque materials, and the lower one - from transparent or light-reflecting material, reflecting diffraction gratings are applied onto the upper surfaces of said layers, the direction, spacing, and profile of grating slits being selected under condition of concentrating no less than 50 % of the light falling onto the grating into the spectrum of some order non-equal to zero being defined for every grating, and also under condition of coinciding the directions of a diffracted light propagation for the lower layer grating in the red section of spectrum, for the middle layer grating in the green section, for the upper layer grating in blue section of the defined order non-equal to zero, the direction of the diffracted light propagation is a direction of observing an image identifying the data carrier authenticity and consists an angle no more than 45° with the carrier plane, the image identifying the data carrier authenticity is colored, has a raster structure and is formed by removing a material in defined sections of the data carrier to the depth of either only upper or both upper and middle opaque layers of the data carrier by means of a laser engraving, and the information placed on the carrier has a form of text and graphic images formed by means of removing a material in defined sections of the data carrier to the depth of both upper and middle opaque layers also by means of the laser engraving.

In this carrier several measures are undertaken to increase the degree of it protection against possible counterfeiting, as well as the speed of recording the corresponding information onto the carrier is increased and necessary convenience for checking the carrier authenticity is created.

Along with that, taking into account that a hologram made in the form of a flat grating is used in the carrier, there exists a possibility of copying it by a holographic method. Therefore, all disadvantages typical for the hologram including practical impossibility to protect individually a plurality of articles are inherent to the carrier (RU-C-2079167 ).

A data carrier is also known comprising at least two layers connected to each other, one of which being made of opaque material, and the other one from a transparent or light-reflecting material, on the layer made from the opaque material on the whole surface of the data carrier is created a reflecting hologram being restorable in white light, which hologram, while lighting, restores an image identifying the data carrier authenticity, the image being observed in a direction consisting an angle no more than 45° with the data carrier plane, the information being placed on the carrier has a form of text and graphic images formed by means of removing a material in defined sections of the data carrier to the depth of both upper and middle opaque layers by means of a laser engraving.

According to that invention, in creating the carrier, the degree of data carrier protection against possible counterfeiting is increased, the costs of its manufacturing are reduced, as well as the speed of recording the necessary information onto the carrier is increased.

Along with that, in manufacturing such a carrier, an introduction of the individual protective features is performed by the laser engraving of every carrier, which is rather expensive.

Moreover, an identification of the protection authenticity requires sufficiently complicated software-hardware means a possibility to create which means is very problematic nowadays (RU-C-2079166).

A protected document such as a banknote, ID-card, etc. with a flat protective element is known from DE 41 26 051 A1. Said protective element is good for visual as well as for automatic verification of authenticity, at the same time this protective element is a multilayer structure having electro luminescent properties. The element maybe combined with UV-fluorescent colouring and printing.

Further, there is known from US-A-4,766,026 and EP-B-0 219 011 an information carrier or ID-card according to the preamble of claim 1, comprising many synthetic layers. An information is recorded with a laser beam in the form of visible irreversible changes of optical properties of the layer synthetic material. In this multitude of synthetic layers at least the first and the second layers have overlapping transparent portions, being selectively for each layer sensitive to the laser beam during the recording of the information in the form of visible irreversible changes. The visible information (being observed simultaneously through the both layers) has a different image depending on the angle of observation because of overlapping of a part of the image of one layer by parts of the image of the other layer.

A data carrier is known being a film structure comprising at least one layer of a polymer material having a relief surface formed by recesses and/or through-holes having the form of solids of revolution, a portion of the recesses or through-holes being filled with an anisotropic material, or transparent electrical conductive material, or a matter having magnetic properties, or a coloring matter, or hydrophobic matter, or hydrophilic matter, or luminescence material, or destructured material of the respective polymer layer, and the film structure comprises at least one layer of a magnetic material, or polarizing material, or luminescent material, or thermoplastic material, or hydrophilic material, or hydrophobic material, or metal material partially overlapping the layer of the polymer material, the layer of the film structure being made from polymer materials having different spectral characteristics and refractive indices, the film structure having on one of its sides a net made from a polymer material or metal, the net having a mesh size equal or greater than 20 µm, and lavsan is used as the net polymer material (EP-A-0 853 296 ).

The data carrier manufactured according to that invention ensures the highest protection degree among the known carriers, thereby practically excluding the possibility of counterfeiting or copying the data carrier in an industrial printing production of the carriers.

Along with that, in some cases it is necessary not only a reliable protection connected with an instrumental control, but also a highly effective visual identification, which obtaining with the help of that data carrier is rather problematic due to a two-dimension stochastic forming of micro-holes in it.

The closest to the present invention by the technical essence and technical result achieved when using is a system for identifying an information authenticity including a multilayer carrier for storing an information in a coded form accessible for reading and writing, the carrier being provided with an identification area having a plurality of segment groups uniformly distributed along the whole surface of the identification area, every sector of the identification area is comprised of a hologram or diffraction grating, which surface is formed by a plurality of parallel grooves having selective refractive capability, every segment having a rectangular form, and segments being placed in the form of matrix (EP-A-0533448). In the connection with the fact that in that device the diffraction gratings are used, then counterfeiting of such data carriers is possible by means of known methods of a holographic copying. A way of complicating the utilized hologram also does not solve the problem of increasing the carrier protection. By increasing the information volume disposed on the carrier it is possible to increase the sample base, and the greater is the base, the greater are the possibilities of the sample and, hence, the protection degree is also increased. When increasing the number of segments, the number of codes in the carrier is increased. The more is their number the more complicatedly is determined the key for cracking. The rate of cracking is not limited in the art but the identification device speed is more substantial. Increasing the segmentation or discretization of the hologram leads to a nonlinear drop of the diffractive efficiency for every area being read, thereby substantially complicating the signal processing device. Moreover, in this carrier the individual protection of documents does not ensure on a physical level.

It is an object of the present invention to create a data carrier for protecting documents and articles from counterfeiting and copying which carrier would allow to increase the degree of a visual protection and to expand the range of protection objects.

This object is solved by a data carrier having the features of claim 1.

The data carrier according to the innovation features sectors in a layer with an identification area, the sectors having micron geometric sizes in three dimensions. Boundary strips are provided the sizes of which are matched with the sector sizes. Further, individual protective properties are now imparted into the data carrier for every article of mass production.

Therefore, the above-mentioned technical result solves the problem according to the present invention with a data carrier being a multilayer structure from a thin-layer material
said data carrier carrying graphic and alphanumeric information,
including at least one layer having an identification area,
said identification area being divided into segments transparent for a modulated light flux, and, further, the segments of said identification area in said layer are separated by boundary strips made from a different material being opaque for the light flux and said boundary strips separating the segments are dividing said layer over the full thickness of same or over a part of the thickness of same.

Preferably, the data carrier is characterized in that said boundary strips separating the segments being each a continuous boundary strip or being formed by a plurality of discrete boundary strips.

Further preferred features include that the boundary strip separating the identification area segments is, in its cross-section, a figure surrounded with second-order lines (lines of equation according to second order). The boundary strips can be made from a magnetic material, or material with colouring and/or luminescent, and/or fluorescent matter, or photo- or electrochrome material, or liquid-crystalline material, or thermoplastic material, or electrical conductive material.

Further preferred features are set in the data carrier a ratio between the boundary strip and a distance between the opposite boundary stripes in the identification area segment is within the range from 0.01 to 1, the thickness of the boundary strip is selected within the range from 0.1 to 10 µm, and a ratio between the height of the boundary strip and the distance between the opposite boundary strips in the identification area segments is selected within the range from 0.1 to 10.0.

It is further preferred that, in the data carrier, the identification area segments can be filled with a magnetic material, or material with colouring and/or luminescent and/or fluorescent matter, or photo- or electrochrome material, or liquid-crystalline material.

In an embodiment of the invention an angle between the layer surface and side surface of the boundary strips is selected within the range from 45° to 90°.

Further embodiments of the invention have at least one layer from a magnetic material, or polarizing material, or luminescent material, or thermoplastic material.

Another embodiment of the invention comprises at least one metal layer partially or fully overlapping the other layers.

In the data carrier, the layers can be made from materials having different spectral characteristics and different refractive indices.

The identification area or its part can have a graphic and alphanumeric information.

The invention is illustrated by the drawings, in which:
- **Fig. 1**: shows the common view of a data carrier;
- **Fig. 2**: is a cross-section of a layer with an identification area;
- **Fig. 3**: shows the layer with the identification area;
- **Fig. 4**: shows several cross-sections of a boundary strip;
- **Fig. 5**: shows a diagram for a visual identification;
- Fig. 6: shows a diagram for a illumination engineering identification;
- Fig .7: shows a diagram for an identification of individual protective features of the data carrier and document.

### Preferred Embodiment of the Invention

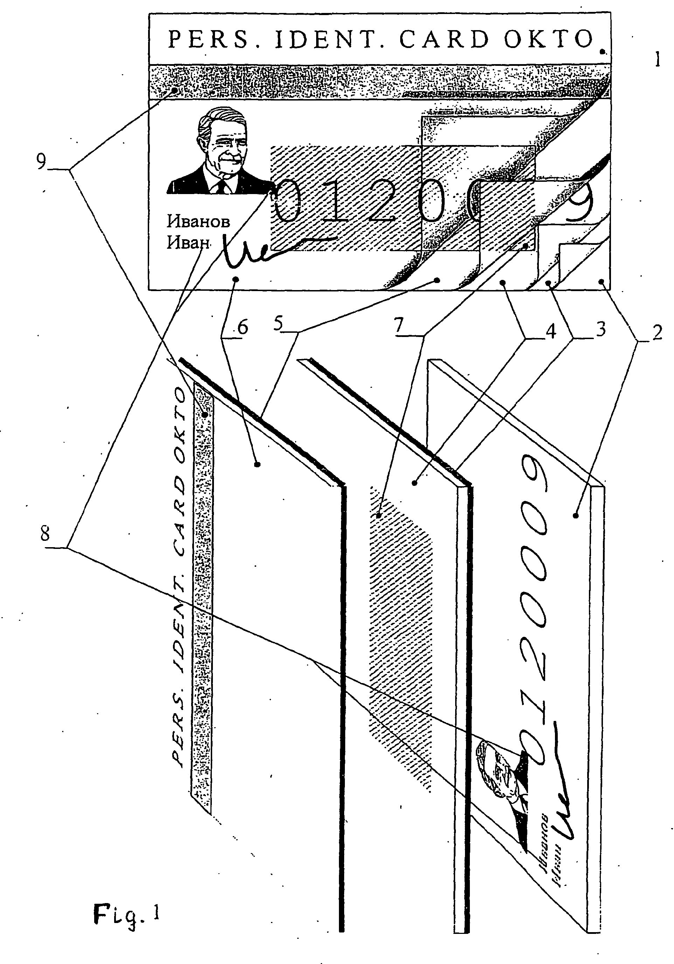

A data carrier 1 (Fig. 1) according to the present invention is a multilayer structure. The number of layers in this structure is determined by the purpose of the data carrier and is selected in every particular case according to technical, technological factors of interfacing the carrier with the recording and reading devices.

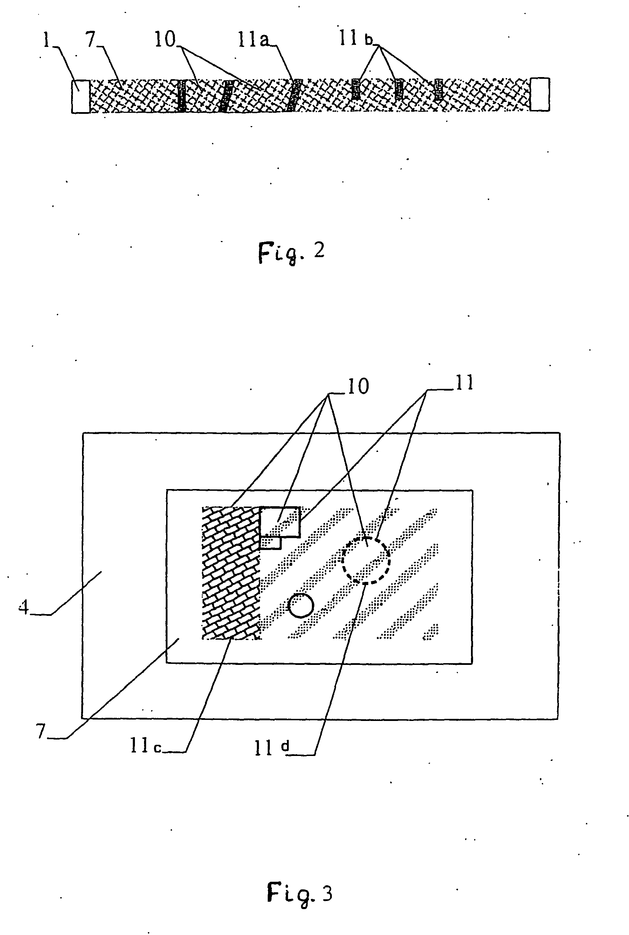

One layer 4 of the multilayer structure (Fig. 1) is made with an identification area 7 comprising segments 10 separated by a boundary strip along the whole thickness of the layer or its part (respectively 11a and 11b in Fig. 2). The boundary strip 11 can be made continuous (11c) or discrete (11d) (Fig. 3).

The layer having the identification area can be made from a metal or dielectric.

The boundary strip 11 has a height equal to the layer thickness (11a) or is less than it (11b) (Fig. 2). The selection of the boundary strip height is determined by operation requirements to the data carrier and peculiarities of the technology for its manufacturing. Thus, for example, if the identification area in the data carrier is designed for operating in a translucent mode, then it is desirable to have the boundary strip with the height along the whole layer thickness, because in this case it is possible to obtain the maximal modulation of the reading light flux in a small interval of lighting and reading angles.

The boundary strip 11 is made with a thickness no less than 0.1 µm due to the fact that it is technologically more complicate to obtain the less thickness, and a variation from its defined value becomes unacceptable for the data carrier operation. Producing the boundary strip with a thickness more than 10 µm is considered inexpedient in connection with decreasing the index of the reading light flux modulation.

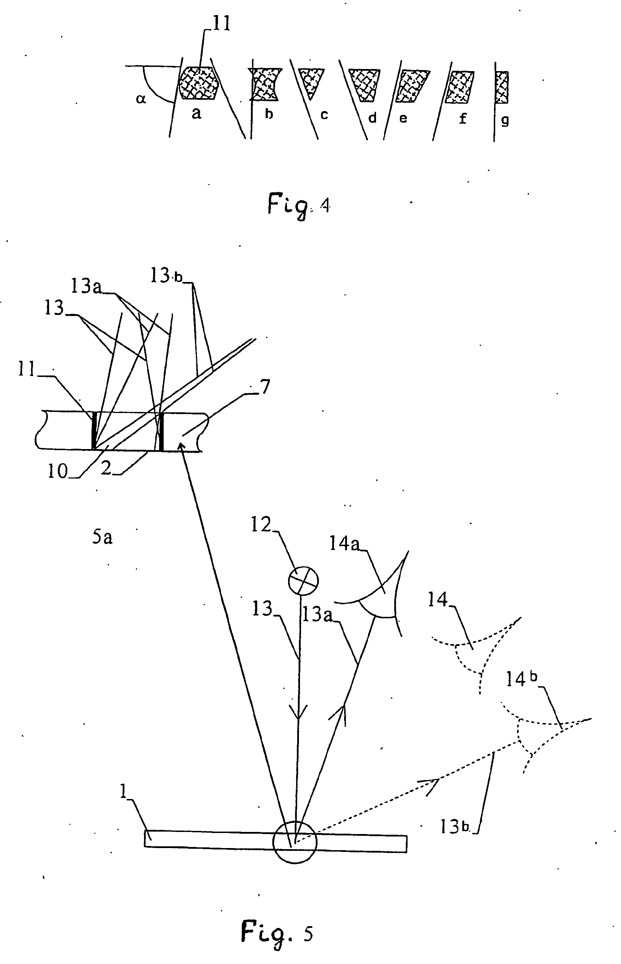

Depending on the operational requirements and peculiarities of the technology for producing the data carrier, the boundary strip 11 can have different forms in its cross-section: "a" (truncated circle), "b" (hyperbola), "c" (triangle), "d", "e" (trapezoid), "f", "g" (parallelogram) (Fig. 4). Moreover, the angle between the layer surface and side surface of the boundary strip is defined within the range from 45° to 90°.

The boundary strip 11 can be filled with different materials depending on conditions of the carrier application and methods for reading an information from it.

It is often required for the protective features on the data carrier to be invisible, and be revealed only with the help of devices. And, of course, the possibility of its copying and counterfeiting requires to be excluded.

Such problems are solved by using the proposed carrier when the boundary strip in it is filled with a matter contrasting in comparison with the segment material. The portion of the boundary strip can be filled with a metal, dielectric, anisotropic, luminescence, fluorescence matter.

In the mentioned variants of filling the boundary strip with different materials, the definitive for their selection is a character of requirements for the data carrier operation and for conditions of the identification of the protective features.

Thus, the data carrier having the boundary strip between segments filled with the luminescence or fluorescence dye stipulates an application of optical devices with light sources and light detectors corresponding to the identification of the protective features by the spectrum.

Now an example of structure of a data carrier 1 according to the present invention (Fig. 1) will be discussed. An adhesion layer 3 interconnecting layers 2 and 4 is located on the layer 2 of a paper basis carrying an informative part of the document with an alphanumeric and graphic information 8. The layer 4 includes an identification area 7 and is covered with a laminating layer 5 carrying a layer 6 with a magnetic strip 9.

The identification area 7 of the layer 4 (Figs 2, 3) consists of segments 10 and boundary strips 11. The segments are made from transparent material, for example, from polyethyleneterephthalat or polypropylene polymer film or other material. The boundary strip 11 can be a set of discrete strips oriented by a given method and having a height equal to the thickness of the layer 4 selected from the interval between 0.1 and 10 mm, and their lengths are formed on the basis of calculation or randomly. The boundary strips are filled by a dye capable to absorb fully or partially the reading light flux.

Fig. 1 shows such location of the identification area 7, when it covers the informative portion 8 of the document: a photo fragment, signatures and digits, on the layer 2.

The identification of the present data carrier can be performed by various methods. In the case of a visual identification (Fig. 5), it is necessary to place a light source 12 so that a light flux 13 lights up the maximal surface of the segments 10 of the identification area 7. Thereby, if an observer 14 looks at the identification area in a position 14a at an angle close to the angle of the carrier illumination, then that observer will receive a maximum light 13a from the light flux 13 already passed the identification area first in one direction and then, after a reflection from the layer 2, in opposite direction. At the angle deviation of the observer 14 from the initial position into the position 14b in the direction perpendicular to a modulation portion of the boundary strip, he/she will register a decrease of the brightness of the reflected light 13b (the modulation portion of the boundary strip means such a portion of the strip which provides the maximal design efficiency of the modulation of the reading light flux from the given fragment of the identification area). This is due to the fact that, when changing the observation angle, the portion of the reflected light flux will be shielded by the boundary strip (Fig 5a). For definite ratios a full overlapping of the light flux by the boundary strip in the direction of the observer can be obtained. The same effect of changing the brightness in the identification area can be obtained when rotating the carrier for the defined angle in the defined direction. If the observer monitors those portion of the carrier in which the image on the document, for example, the photo, is covered by the identification area, then in this case he/she will recognize the change in image brightness when changing the angle of view or when rotating the carrier. There is also a possible variant, when the observer distinguishes said conditions not due to changing the image brightness, but by changing its color which depends on different spectral characteristics of materials of the boundary strip, the segment and the image on the document. In the identification area, the fragments from segments and boundary strips can be created, for which fragments different conditions of lighting and identification could be created, thereby substantially expanding the protection spectrum.

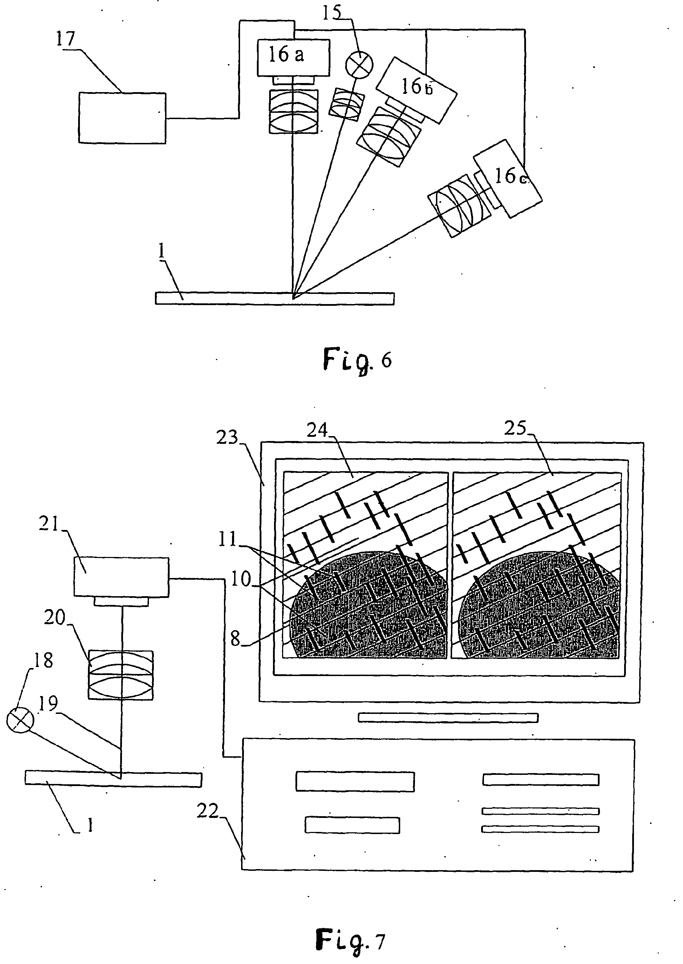

Similar to the visual identification, a scheme for illumination engineering identification shown at Fig. 6 is designed, where the data carrier 1 is illuminated by a light source 15, and a light flux reflected from the carrier is registered and processed by light detectors 16a, 16b, 16c, and signal processing unit 17. Here the observer's eye is replaced by the light detector and there could be several such detectors 16a, 16b, 16c, which is, on one hand, connected with increasing the identification reliability and, on the other hand, with the conditions of the identification for different fragments of the identification area.

Different variants of analyzing the identifications results are possible. For example, the value of intensity of the light falling onto the detector could be determined in advance, and if its current value differs from the predetermined, then the protective feature does not correspond to the defined.

In other variant, several light detectors are located at given angles to the carrier surface and the signals registered by them corresponding to the protective features of the data carrier being identified are supplied to the signal processing unit 17 which analyzes the supplied signals and forms a signal of correspondence of the protective features to the given ones. Every detector could register the light by an intensity and color.

The identification of the protective features of the data carriers can be performed by means of analyzing an optical density of the segments and boundary strip, its geometrical pattern, and also image fragments being in the area under investigation (Fig. 7). Here the data carrier 1 is illuminated by a light source 18, and a light flux 19 reflected from the data carrier is projected with the help of microlens 20 to a matrix of a videocamera 21, where an enlarged image of the fragment of the area being identified is formed. The videocamera 21 is interfaced with a computer 22 where the image is processed and output to a monitor 23 as an image 24. The document being tested with the data carrier could be considered as an authentic, if the above-mentioned features coincide sufficiently with corresponding features 25 of the document original, which features are stored in a database. The identification method described above relates to the identification of protective features of the data carrier.

The above-mentioned identification methods are used also in the case when the boundary strip is filled by the material not only fully or partially absorbing the light, but having other physical properties: rotation of a polarization plane, fluorescence, luminescence, electrochrome effect, electrostriction, magnetic and other properties. Said properties of the boundary strip material provide a possibility to identify the protective features simultaneously or successively by means of devices registering different physical parameters. This increases the level of the data carrier protection and the reliability of the identification of its protective features.

The above noticed could be referred also to the identification of the data carrier protective features in the case of filling or making the identification area sectors from materials with different physical properties: optical, holographic, electrochrome, magnetic, fluorescent, electrostriction, luminescence and other.

When performing the identification of the protective features formed on the base of materials which properties being changed under effect of electrostatic or electrodynamic forces, the layer with the identification area is placed between the electrodes or electrode group on one of the layer sides, or the boundary strip is filled with the electrical conductive material performing the function of electrodes in the case when the segments are filled with this material.

The data carrier according to the present invention can be made by various methods. For example, first, the layer is produced in the form of a film having the identification area in the form of segments separated by the boundary strip. The boundary strip is created by irradiating the film by charged particles through a mask and, if necessary, a chemical or photochemical treatment is performed to form a continuous or discrete groove being filled with a contrasting material, for example, a dye on the boundary between two segments. Then, a laminate is applied onto one side of the layer, and an adhesion layer onto another side. Using the latter, the produced multilayer structure is fixed on the document which material serves as a basis for the data carrier.

Now one of the variants of technology for producing the boundary strip (continuous or discrete, equal to the whole thickness of the layer or to its part) will be discussed. A layer actinic to the laser emission (for example, black soot layer actinic to the IR spectrum) is applied onto a surface of a polystyrol film colored (for example, red) in mass. By means of scanning the finely focused laser beam the identification area is formed: the boundary strip between segments is burned out in the film according to a program. The given intensity of the laser emission defines the depth of the boundary strip. Then the boundary strip is filled with a dye (for example, blue). The boundary strip can be a set of lines with a thickness of 5 µm, height of 7 µm, and this set could consist of two groups of parallel lines orthogonal to each other in such a way that continuous lines of one group occur in the middle of intervals between lines in the form of sections of other group. The section size is 10 µm, and the distance between the continuous lines is 15 µm.

### Industrial Applicability

The present invention can be used in creating the data carriers applied for protecting documents, stocks and works of art from counterfeiting or copying while ensuring a high degree of protection practically excluding the possibility of their counterfeiting by existing modern means in the field, of the invention. The invention also provides every article, in the case of a mass production, with an individual protective feature in the data carrier for the particular article.

## Claims

1. A data carrier (1)
being a multilayer structure from a thin-layer material,
said data carrier (1) carrying graphic and alphanumeric information (8),
including at least one layer (4) having an identification area (7),
said identification area (7) being divided into segments (10) transparent for a modulated light flux,
**characterized in**
**that** the segments (10) of said identification area (7) in said layer (4) are separated by boundary strips (11) made from a different material being opaque for the light flux and said boundary strips (11) separating the segments (10) are dividing said layer (4) over the full thickness of same (see 11a) or over a part of the thickness of same (11b).

2. A data carrier (1) according to claim 1,
**characterized in**
**that** said boundary strips (11) separating the segments (10) being each a continuous boundary strip (11a) or being formed by a plurality of discrete boundary strips (11b).

3. A data carrier according to any of the proceeding claims,
**characterized in**
**that** in the data carrier (1) a ratio between the boundary strip (11) and a distance between the opposite boundary strips (11) in the identification area segment (10) is within the range from 0.01 to 1, and the thickness of the boundary strip (11) is selected within the range from 0.1 to 10 µm.

4. A data carrier according to any of the proceeding claims,
**characterized in**
**that** in the data carrier (1) the boundary strip (11) separating the identification area segments (10) is in its cross-section a figure surrounded with lines described by second order equation.

5. A data carrier according to any of the proceeding claims,
**characterized in**
**that** in the data carrier (1) an angle between the surface of the layer (4) and the side surface of the boundary strip (11) is selected within the range from 45° to 90°.

6. A data carrier according to any of the proceeding claims,
**characterized in**
**that** in the data carrier (1) a ratio between the height of the boundary strip (11) and the distance between the opposite boundary strips (11) in the identification area segment (10) is selected within the range from 0.1 to 10.0.

7. A data carrier according to any of the proceeding claims,
**characterized in**
**that** in the data carrier (1) the identification area segments (10) are filled with magnetic material, or with material with colouring and/or luminescent and/or fluorescent matter, photo- or electrochrome material, or liquid-crystalline material.

8. A carrier according to any of the proceeding claims,
**characterized in**
**that** in the data carrier (1) the boundary strips (11) separating the identification area segments (10) are made from magnetic material, or material with colouring and/or luminescent and/or fluorescent matter, or photo- or electrochrome material, or liquid-crystalline material, or thermoplastic material, or electrical conductive material.

9. A data carrier according to any of the proceeding claims,
**characterized in**
**that** the data carrier (1) comprises at least one layer from magnetic material, or polarizing material, or luminescent material, or thermoplastic material.

10. A data carrier according to any of the proceeding claims,
**characterized in**
**that** the data carrier (1) comprises at least one metal layer partially or fully overlapping the other layers.

11. A data carrier according to any of the proceeding claims,
**characterized in**
**that** in the data carrier (1) the layers are made from materials having different spectral characteristics.

12. A data carrier according to any of the proceeding claims,
**characterized in**
**that** in the data carrier (1) the layers are made from materials having different refractive indices.

13. A data carrier according to any of the proceeding claims,
**characterized in**
**that** in the data carrier (1) the identification area (7) have a graphic and alphanumeric information.

## Patentansprüche

1. Datenträger (1),
der eine mehrlagige Struktur aus einem dünnlagigen Werkstoff ist,
wobei der Datenträger (1) graphische und alphanumerische Informationen (8) trägt,
einschließlich wenigstens einer Schicht (4) mit einem Bereich (7) für die Identifizierung,
welcher Bereich (7) für die Identifizierung in Segmente (10) aufgeteilt ist, die für einen modulierten Lichtfluss transparent sind,
**dadurch gekennzeichnet,**
**dass** die Segmente (10) des Bereiches (7) für die Identifizierung in der Schicht (4) durch Trennstreifen (11) voneinander getrennt sind, welche aus einem anderen Werkstoff bestehen, der für den Lichtfluss getrübt ist, und wobei die Trennstreifen (11), die die Segmente (10) voneinander trennen, die Schicht (4) über die gesamte Dicke derselben (vergleiche 11a) oder über einen Teil der Dicke derselben (11 b) teilen.

2. Datenträger (1) nach Anspruch 1,
**dadurch gekennzeichnet,**
**dass** die Trennstreifen (11), die die Segmente (10) voneinander trennen, jeder als ein kontinuierlicher Trennstreifen (11a) oder aus mehreren diskreten Trennstreifen (11 b) gebildet sind.

3. Datenträger nach einem der vorstehenden Ansprüche,
**dadurch gekennzeichnet,**
**dass** in dem Datenträger (1) ein Verhältnis zwischen dem Trennstreifen (11) und einem Abstand zwischen einem der gegenüberliegenden Trennstreifen (11) in dem Segment (10) des Bereiches für Identifizierung innerhalb eines Bereiches von 0,01 bis 1 liegen, und dass die Dicke des Trennstreifens (11) in dem Bereich zwischen 0,1 und 10 µm gewählt ist.

4. Datenträger nach einem der vorstehenden Ansprüche,
**dadurch gekennzeichnet,**
**dass** in dem Datenträger (1) der Trennstreifen (11), der die Segmente (10) des Bereiches für Identifizierung trennt, in seinem Querschnitt eine Figur umgeben mit Linien ist, die durch eine Gleichung zweiten Grades beschrieben werden.

5. Datenträger nach einem der vorstehenden Ansprüche,
**dadurch gekennzeichnet,**
**dass** in dem Datenträger (1) ein Winkel zwischen der Oberfläche der Schicht (4) und der Seitenoberfläche des Trennstreifens (11) innerhalb des Bereiches von 45° bis 90° gewählt ist.

6. Datenträger nach einem der vorstehenden Ansprüche,
**dadurch gekennzeichnet,**
**dass** in dem Datenträger (1) ein Verhältnis zwischen der Höhe des Trennstreifens (11) und dem Abstand zwischen einander gegenüberliegenden Trennstreifen (11) in dem Segment (10) des Bereiches für die Identifizierung innerhalb des Bereiches von 0,1 bis 10,0 gewählt ist.

7. Datenträger nach einem der vorstehenden Ansprüche,
**dadurch gekennzeichnet,**
**dass** in dem Datenträger (1) die Segmente (10) des Bereiches für die Identifizierung mit magnetischem Werkstoff oder mit Werkstoff mit färbenden und/oder lumineszentem und/oder fluoreszierendem Material oder foto- oder elektrochromem Werkstoff oder flüssigkristallinem Werkstoff gefüllt sind.

8. Datenträger nach einem der vorstehenden Ansprüche,
**dadurch gekennzeichnet,**
**dass** in dem Datenträger (1) die Trennstreifen (11), die die Segmente (10) der Bereiche für die Identifizierung voneinander trennen, aus einem magnetischen Werkstoff oder aus einem Werkstoff mit färbendem und/oder lumineszentem und/oder fluoreszentem Material oder foto- oder elektrochromem Werkstoff oder flüssigkristallinem Werkstoff oder thermoplastischem Werkstoff oder elektrisch leitfähigem Werkstoff bestehen.

9. Datenträger nach einem der vorstehenden Ansprüche,
**dadurch gekennzeichnet,**
**dass** der Datenträger (1) wenigstens eine Schicht aus einem magnetischen Werkstoff oder polarisierenden Werkstoff oder lumineszenten Werkstoff oder thermoplastischen Werkstoff aufweist.

10. Datenträger nach einem der vorstehenden Ansprüche,
**dadurch gekennzeichnet,**
**dass** der Datenträger (1) wenigstens eine Metallschicht aufweist, die teilweise oder ganz die anderen Schichten überlappt.

11. Datenträger nach einem der vorstehenden Ansprüche,
**dadurch gekennzeichnet,**
**dass** in dem Datenträger (1) die Schichten aus Werkstoffen bestehen, die unterschiedliche Spektraleigenschaften haben.

12. Datenträger nach einem der vorstehenden Ansprüche,
**dadurch gekennzeichnet,**
**dass** in dem Datenträger (1) die Schichten aus Werkstoffen bestehen, die unterschiedliche Brechungsindizes aufweisen.

13. Datenträger nach einem der vorstehenden Ansprüche,
**dadurch gekennzeichnet,**
**dass** in dem Datenträger (1) der Identifikationsbereich (7) eine graphische und alphanumerische Information besitzt.

## Revendications

1. Support de données (1)
constitué d'une structure multicouche d'un matériau en couche fine,
ledit support de données (1) comportant des informations graphiques et alphanumériques (8),
comprenant au moins une couche (4) dotée d'une zone d'identification (7),
ladite zone d'identification (7) étant divisée en segments (10) transparents pour un flux de lumière modulée,
**caractérisé en ce que**
les segments (10) de ladite zone d'identification (7) de ladite couche (4) sont séparés par des bandes limites (11) réalisées dans un matériau différent qui est opaque pour le flux de lumière, et lesdites bandes limites (11) qui séparent les segments (10) divisent ladite couche (4) sur toute son épaisseur (11a) ou sur une partie de son épaisseur (11b).

2. Support de données (1) selon la revendication 1,
**caractérisé en ce que**
lesdites bandes limites (11) qui séparent les segments (10) sont continues (11a) ou formées d'une pluralité de bandes limites distinctes (11b).

3. Support de données selon l'une des revendications précédentes,
**caractérisé en ce que**
dans le support de données (1), le rapport entre la largeur de la bande limite (11) et une distance entre les bandes limites opposées (11) du segment (10) de la zone d'identification est compris entre 0,01 et 1, et l'épaisseur de la bande limite (11) est comprise entre 0,1 et 10 µm.

4. Support de données selon l'une des revendications précédentes,
**caractérisé en ce que**
dans le support de données (1), la section de la bande limite (11) séparant les segments (10) de la zone d'identification est une figure entourée de lignes décrites par une équation du second degré.

5. Support de données selon l'une des revendications précédentes,
**caractérisé en ce que**
dans le support de données (1), l'angle formé entre la surface de la couche (4) et la surface latérale de la bande limite (11) est compris entre 45° et 90°.

6. Support de données selon l'une des revendications précédentes,
**caractérisé en ce que**
dans le support de données (1), le rapport entre la hauteur de la bande limite (11) et la distance entre les bandes limites opposées (11) du segment (10) de la zone d'identification est compris entre 0,1 et 10,0.

7. Support de données selon l'une des revendications précédentes,
**caractérisé en ce que**
dans le support de données (1), les segments (10) de la zone d'identification sont remplis d'un matériau magnétique, ou d'un matériau coloré et/ou luminescent et/ou fluorescent, ou d'un matériau de type photochrome ou électrochrome ou d'un matériau de type cristal liquide.

8. Support de données selon l'une des revendications précédentes,
**caractérisé en ce que**,
dans le support de données (1), les bandes limites (11) séparant les segments (10) de la zone d'identification sont remplis d'un matériau magnétique, ou d'un matériau coloré et/ou luminescent et/ou fluorescent, ou d'un matériau de type photochrome ou électrochrome, ou d'un matériau de type cristal liquide, ou d'un matériau thermoplastique ou d'un matériau électroconducteur.

9. Support de données selon l'une des revendications précédentes,
**caractérisé en ce que**
le support de données (1) comprend au moins une couche d'un matériau magnétique, ou d'un matériau polarisant, ou d'un matériau luminescent ou d'un matériau thermoplastique.

10. Support de données selon l'une des revendications précédentes,
**caractérisé en ce que**
le support de données (1) comprend au moins une couche métallique recouvrant partiellement ou totalement les autres couches.

11. Support de données selon l'une des revendications précédentes,
**caractérisé en ce que**
dans le support de données (1), les couches sont réalisées dans des matériaux ayant des caractéristiques spectrales différentes.

12. Support de données selon l'une des revendications précédentes,
**caractérisé en ce que**
dans le support de données (1), les couches sont réalisées dans des matériaux ayant des indices de réfraction différents.

13. Support de données selon l'une des revendications précédentes,
**caractérisé en ce que**
dans le support de données (1), la zone d'identification (7) comporte une information graphique et alphanumérique.
